# EUROPEAN PATENT APPLICATION

(11) **EP 0 526 424 A2**
(43) Date of publication of application: **03.02.1993**
(21) Application number: 92830396.5
(22) Date of filing: 21.07.1992
(51) Int. Cl.: G01S 17/88, G01S 13/93, B60Q 1/52

(54) **A light unit for vehicles, incorporating an obstacle-detection system**

(30) Priority: 31.07.1991 IT TO910193 U
(71) Applicant: CARELLO S.p.A., I-10135 Torino (IT)
(72) Inventor: Pera, Luciano, I-10048 Vinovo (Torino) (IT); Alessandretti, Giancarlo, I-10146 Torino (IT); Innocenti, Gianfranco, I-10040 Rivalta (Torino) (IT)
(74) Representative: Bosotti, Luciano

(57) **Abstract**

The light unit (1) includes at least part of a radar-type (OPDAR) obstacle-detection system (5) which is intended to scan the space in front of the vehicle and to supply the driver with corresponding warning signals in dependence on the echoes reflected back by any obstacles present in front of the vehicle. The preferred application is for obstacle-detection systems for motor vehicles operating on the basis of the emission of laser beams (6, 9).

## Description

The present invention relates in general to obstacle-detection (or location) systems for vehicles, this expression generally meaning any device which uses detecting radiation, for example, radio waves, typically in the microwave range, or light emissions, for example, with the use of lasers operating in the infra-red range, to locate, that is, to detect obstacles present in the path of the vehicle so as to send warning signals to the driver either by actually locking onto the preceding vehicle in order to carry out a "cruise-control" function, or by actually providing an artifical display in adverse weather conditions (rain, fog, etc.).

The prior art in this connection is quite extensive as shown, by way of example, by British patent applications 2,101,832 and 2,139,036 and United States patent 4,552,456.

When a technical solution of the type specified above is applied to a motor vehicle such as a motor car, as well as solving specific technical problems, it is also necessary to address other problems relating purely to the installation and mounting of the system in the vehicle.

These problems do not usually arise when locating systems are mounted, for example, on aircraft (which have several places, for example, the nose, which can be selected for their mounting and in which the provision of ogives along the fuselage or on the wings, or of brackets or pods projecting from the wings does not usually constitute a problem) or on specialised vehicles (typically such as military vehicles) for which the problem of the overall appearance and the installation cost are of relatively limited importance.

When the problem of installing an obstacle-detection system in a motor vehicle arises, however, one is faced simultaneously with aesthetic and functional requirements which exclude the possibility of installating the system in situations or positions in which it might detract from the overall appearance of the vehicle. This is particularly true if one takes account of the ever-greater tendency to produce motor vehicles with rounded, aerodynamic shapes.

Moreover, in connection with the mounting and installation of the system, it should not be forgotten that, at least at the present moment, the fitting of systems of the type specified above is aimed towards the so-called "after market" rather than towards their installation as original equipment in all motor cars of a certain type and model coming off a production line.

It is desirable that the installation of systems as sophisticated and important as obstacle-detection systems should not be left completely to the discretion of the technicians entrusted therewith but should be carried out with reference to predetermined stipulations which depend upon the final performance to be achieved, and which can be repeated precisely when the system is installed as an accessory on a motor vehicle already in circulation.

The object of the present invention is therefore to provide an ideal solution to the requirements set out above.

According to the present invention, this object is achieved by the solution described specifically in the following claims.

In other words, the present invention is based on the solution of incorporating the system (for example, a laser or microwave system) - at least partially - in one of the light units of a motor vehicle.

In practice, this can be achieved by the fitting of the obstacle-detection system within a front light unit in a position generally beside one or more of the reflectors which are normally included in such a light unit.

For example, with reference to solutions currently in production which provide for the production of front light units each including two reflectors side by side, one for the parking lights and the driving beam, and the other for the dipped headlights, one could consider incorporating all the light functions (the parking lights, the driving beam and the dipped headlights) in a single reflector (according to a widely-known solution) and using the space left free by the reflector for the dipped headlights to install the obstacle-detection system.

As regards the reference made above to the possibility of installing the system "at least partially" in the light unit, it should be stated that this expression is intended as a single phrase covering a group - which, however, is not exhaustive - of possible solutions such as those which provide for:
- the installation of the transmitter and the receiver of the system in two different light units, for example, the transmitter in the right-hand front unit and the receiver in the left-hand front unit,
- the installation of the transmitter-receiver unit in a single light unit (for example, that mounted on one side of the front of the vehicle) with the use, on the opposite side, of a conventional light unit or, even better, a light unit the appearance of which is modified so that it is completely identical to the light unit in which the obstacle-detection system is mounted,
- the incorporation solely of the transmitter or solely of the receiver of the system in one of the light units, the complementary member being housed in a different position (for example, a single transmitter or light-emitter mounted centrally on the vehicle and two receivers disposed symmetrically in the two front light units), or
- the duplication of the system with the use of two obstacle-detection systems, one disposed in the right-hand front light unit and the other in the left-hand front light unit of the vehicle.

As stated, however, this list should in no way be considered exhaustive.

The installation of the obstacle-detection system in one of the light units of the vehicle has considerable advantages from a functional point of view, both as regards the fact that it avoids the need to open up other regions of the front part of the motor vehicle or to provide openings, seats or housings therein, which would quite clearly have aesthetic disadvantages, and as regards the fact that the system can be positioned exactly and precisely; in fact, it is fitted in a member (the light unit) which has to perform the essentially similar function of projecting a beam of light into the space in front of the vehicle; the orientation of the system can also be adjusted precisely and, moreover, it can, of course, be located in a region already provided with electrical supply cables, which particularly simplifies the wiring of the system. Moreover, since the obstacle-detection system is fitted in the light unit, it also benefits from the protection of the lens at the front of the unit and from the cleaning of the lens by the headlamp wash-wipe devices associated with the lens.

The invention will now be described, purely by way of non-limiting example, with reference to the appended drawings, in which:
Figure 1 is a general perspective view of the front part of a motor vehicle, such as a motor car, equipped with the invention, and
Figures 2 and 3 are partially cut-away views with some parts removed for clarity of illustration, showing the portion of Figure 1 indicated by the arrow II, in elevation and in plan, respectively.

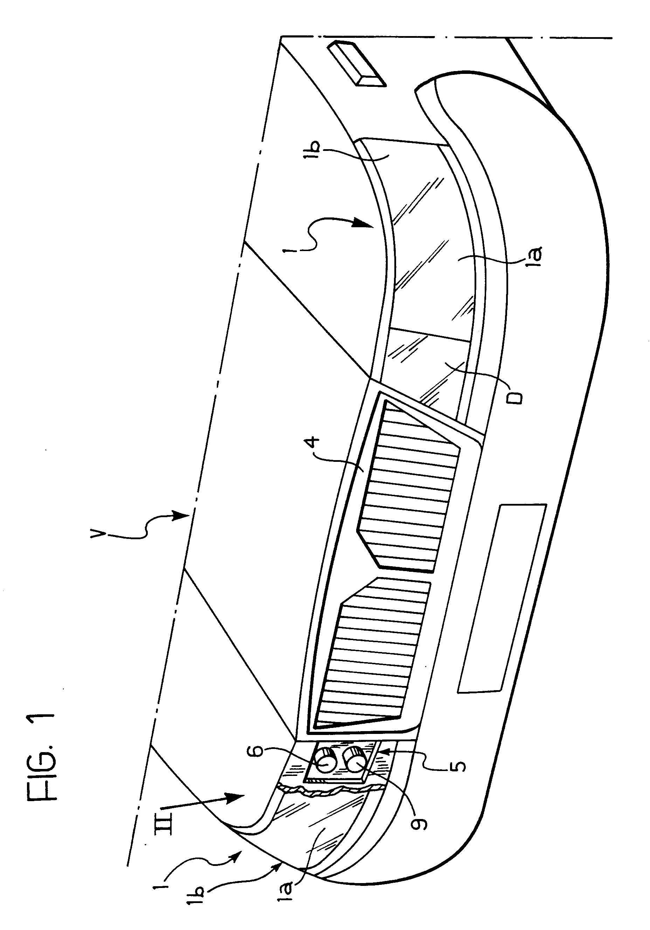

As stated, Figure 1 shows schematically the front part of a motor vehicle V which is not shown as a whole.

According to a widely-known solution, the front part of the car V has two light units 1 on opposite sides, each usually having a strip-like structure with a front portion 1a, which extends along the front face of the vehicle, and a side portion 1b, which extends along the side of the bodywork of the vehicle.

The front portion 1a, which is covered by a thick lens 1c having grooves (in known manner) for shaping the light beam emitted by the lights housed in the unit 1, usually includes a portion 2 which houses a reflector for projecting the light beam produced by a light source (a lamp) 3. Naturally, the lamp includes several filaments, the emittances and positions relative to the reflector surface (which is usually a simple or multiple parabolic surface) of which are such that (according to which filaments are switched on at the time in question) they can act as parking lights, dipped headlights or driving beams.

The outer or side portion 1b of the light unit 1 usually houses an indicator or direction-change light (not shown specifically).

The main characteristic of the invention is that the unit 1 incorporates an obstacle-detection (locating) system 5 which is intended to act as an aid to the driving of the vehicle, for example - with reference to the situation shown in the drawings - in an inner position, that is, in the position nearest the so-called "grille" 4.

Briefly, this is a microwave or laser radar (OPDAR) system which projects radiation into the space in front of the vehicle whilst the vehicle is in motion and receives and processes the echoes reflected back by any obstacles in order to send a corresponding warning signal to the driver of the vehicle.

This is in accordance with criteria which are widely known in the art and do not need to be recited specifically herein.

By way of example, the system 5 may include (see the detail of Figure 1) an emitter unit 6 including a semiconductor laser operating at a wavelength of about one micron (for example 905 nanometres) with a peak power of the order of tens of watts, emitting light pulses (typically within the infra-red range) at a frequency of the order of 1000 Hz.

Also according to known criteria, the emitter 6 may be associated with an anamorphic optical system so that, instead of emitting a lobe-like beam of circular cross-section, the source projects a beam which is elongate vertically (like the pupil of a cat's eye) so that, for example, its vertical divergence is greater than its horizontal divergence, to enable better adaptation to the positions of the obstacles.

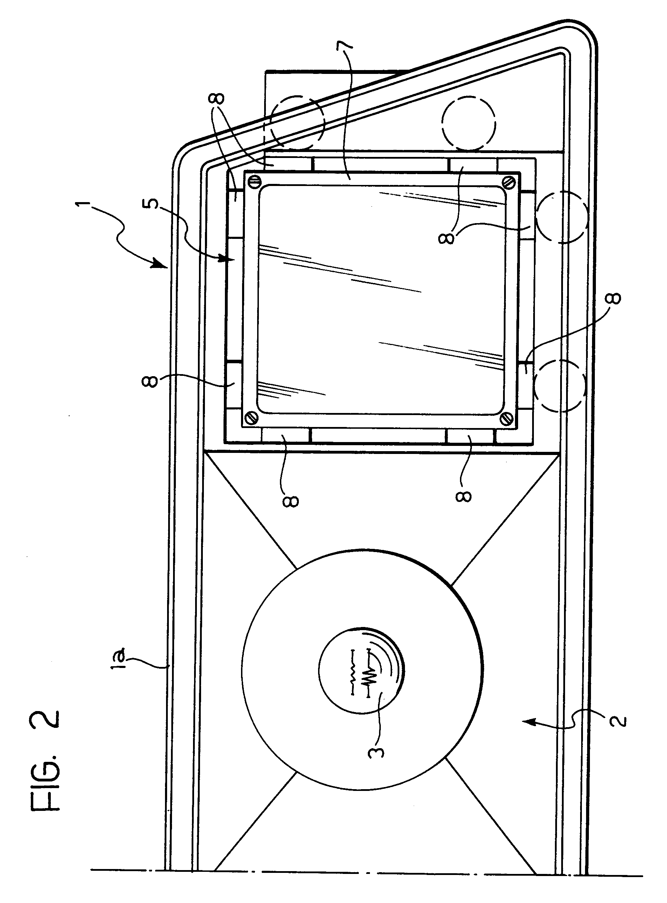

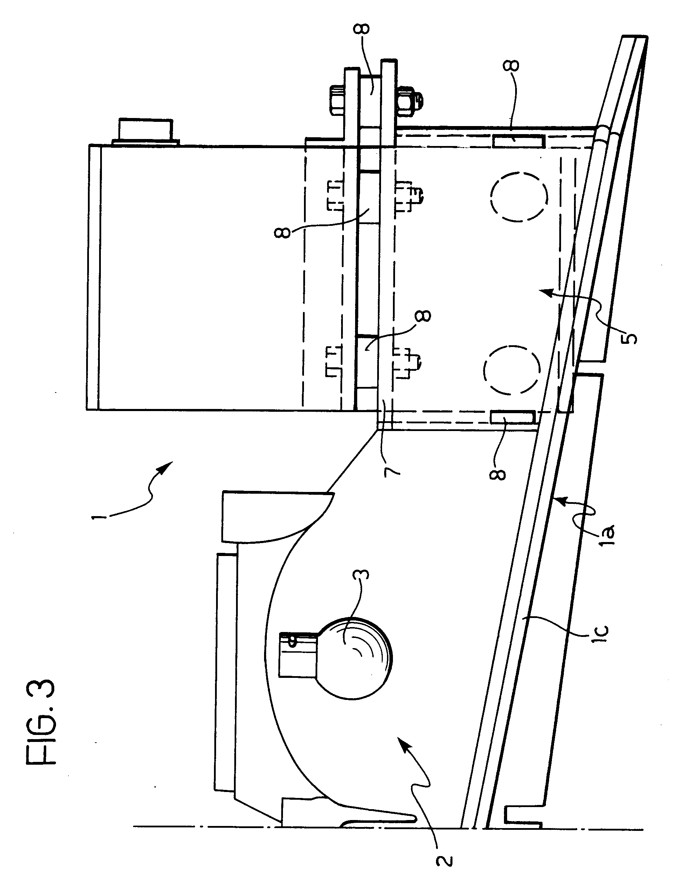

The device 5 as a whole (which, as regards its overall bulk, is shown in Figures 2 and 3) is mounted on a platform 7 (in practice, a solid casing closed by a glass front which acts as a filter and is transparent to the radiation emitted and/or received). The platform 7 (see Figures 2 and 3) is supported on the body of the light unit 1 with the interposition of resilient elements (for example, rubber blocks 8). The platform in question performs a scanning movement in a horizontal plane so as to cover the region of interest in front of the vehicle. This can be achieved, for example, by means of a stepped electric motor (not shown in the drawings). The optical head of the system may include, in a generally complementary configuration, a receiver 9 (typically constituted by an avalanche photodiode APD) which can detect and amplify the returning echo signal of the system (typically at nanowatt level in the presence of environmental conditions of average absorbance, with a maximum range of the system of up to 150 m). The receiver 9 may also be associated with an anamorphic optical system which makes the reception of the receiver spatially selective; naturally, this is in order to make the receiver sensitive exclusively to the echoes of the signal emitted and not to spurious signals from the outside environment.

The embodiment illustrated - purely by way of non-limiting example - provides for the system 5 as a whole (this term meaning the emitter and the receiver together) to be incorporated in only one of the front light units of the motor car V, for example, in its right-hand front light unit.

In this case, in order not to detract from the appearance of the car V, the opposite light unit will have a passive or inactive portion in a complementary position, that is, a so-called "dummy" D which has no functional role but simply duplicates the obstacle-detection device 5 mounted in the light unit on the opposite side from an aesthetic point of view.

Naturally, as already indicated in the introduction to the present description, variants may be produced, for example, in which the emitter and the receiver of the obstacle-detection system are associated with respective front light units 1 of the vehicle.

Naturally, as already indicated, many other variants are also possible.

## Claims

1. A light unit (1) for vehicles, characterised in that it incorporates at least part of an obstacle-detection system (5) for emitting a wave beam in front of the vehicle and/or for picking up echoes produced by obstacles in front of the vehicle (V) fitted with the light unit (1), in use.

2. A light unit according to Claim 1, characterised in that it incorporates the transmitter (6) of the obstacle-detection system (5).

3. A light unit according to Claim 1, characterised in that it incorporates the receiver (9) of the obstacle-detection system (5).

4. A light unit according to Claim 1, characterised in that it incorporates both the transmitter (6) and the receiver (8) of the obstacle-detection system (5).

5. A light unit according to any one of the preceding claims, characterised in that it includes means (8) for imparting a swinging movement to the respective portion of the obstacle-detection system (5) incorporated in the light unit to enable the system (5) to search the space in front of the vehicle with a general scanning movement.

6. A light unit according to any one of the preceding claims, characterised in that the obstacle-detection system operates by emitting a laser beam.

7. A light unit according to any one of Claims 1 to 5, characterised in that the obstacle-detection system operates by emitting radio waves, typically microwaves.
